# EUROPEAN PATENT APPLICATION

(11) **EP 3 300 948 A1**
(43) Date of publication of application: **04.04.2018**
(21) Application number: 17191884.0
(22) Date of filing: 19.09.2017
(51) Int. Cl.: B60P 3/035, B60P 7/06

(54) **MAGNETIC LOAD FASTENING SYSTEM FOR COIL LOAD TRANSPORTATION**

(30) Priority: 20.09.2016 TR 201613109
(71) Applicant: Tirsan Treyler Sanayi Ve Ticaret Anonim Sirketi, 54580 Sakarya (TR)
(72) Inventor: YILMAZ, Tugay, 54580 SAKARYA (TR); KIRAÇ, Yalç n, 54580 SAKARYA (TR); ÖZTÜRK, enol, 54580 SAKARYA (TR)
(74) Representative: Yamankaradeniz, Kemal

(57) **Abstract**

The invention consists of roll load where magnetizable materials such as tin, metal etc. are cut and rolled into coils (R); trailer (T) on which the said roll load (R) will be transported; roll chamber (10) on which the said roll load (R) is placed to be transported on the said trailer (T); load fastener (20) positioned on trailer chassis (12) where the said roll chamber (10) is connected to trailer (T); and it is about a magnet assembly (21) ensuring that the said roll load (R) is fixated with the magnetic field created by the said magnet assembly (21); magnet contact surface (211) which ensures that the magnetic field affects the roll load (R) thanks to contact between roll load (R) and the said magnet assembly (21), and rotating magnet (213) and fixed magnet (214) which are present in the said magnet assembly (21) and create magnetic field.

## Description

### Technical Field

The invention is about coil load fastening mechanisms in vehicles used for coil load transportation with semi-trailers and trucks.

The invention is specifically related to a magnetic load fastener which enables magnetizable coil loads placed in coil chamber to be fastened through creation of a magnetic field with multiple magnets.

### Current Technique

Today, various systems are used to transport large sized metal/tin coils. One of these systems consists of vertical posts placed in cargo area, load fastening rings located on vehicle rave and fastening equipment (rope, chain or cable).

In the previous technique, besides the additional equipment required to provide load safety in vehicles, there is a need for labor force in order to ensure load security. In order for the load to be fastened securely, the coil loads are placed as to lean on vertical posts in the chamber. By using fastening ropes, the coil load is fastened to load fastening rings. Labor force is required for vertical posts to be placed and for fastening ropes, chains or cables to be connected.

In the known state of the technique, moving and placing the coil in vehicles may cause various accidents and injuries. In addition, ropes, chains, etc. elements used to fasten the coil can break or rupture.

In the patent research made in the previous technique, the file no. US4526500 has been encountered. The relevant invention is about fastening of metal coil inside transportation vehicles via fastening equipment like chain, rope, etc. There is a slotted structure on the coil through which fastening element would pass. Thanks to this structure, fastening element does not damage the coils. With the application in question, fastening of coil is achieved. However, more parts are used for this fastening process. Additionally, as these parts have a high chance of rupturing, this application may be presented as an example of the disadvantages mentioned above.

In the patent research made in the previous technique, the file no. US2622918 has been encountered. In the said application, a curved chamber was designed in which the coils would be placed. However, fastening of coil loads placed in this chamber is still achieved through equipment such as rope, etc. Therefore, this application can also be presented as an example of the disadvantages mentioned above.

In conclusion, there are advancements in coil load fastening mechanisms in parallel to developing technology, and thus new structures which would eliminate the disadvantages mentioned above and provide solution to the existing systems are needed.

### Purpose of the Invention

Different from the structures used with the existing technique, the invention is related to coil load fastening mechanisms that were developed to provide solutions to the aforementioned disadvantages and provide additional advantages.

The purpose of the invention is to eliminate the need for labor force required during fastening by creating a magnetic field to fasten coils.

Another purpose of the invention is to prevent errors arising from labor force during fastening of coils.

Another purpose of the invention is to ensure the safety of the load through the magnetic field created by the magnets placed in cargo area. Here, fastening is achieved through force of attraction exerted on the magnetizable coil loads.

Another purpose of the invention is to eliminate the use of additional equipment such as rope, chain, etc. that are used to fasten coils.

In order to fulfill the aforementioned purposes, a magnetic load fastener which enables magnetizable coil loads placed in coil chamber to be fastened through creation of a magnetic field with multiple magnets has been developed.

Structural characteristics and all advantages of the invention will be understood more clearly with the figures provided below and detailed explanations referencing these figures. Therefore, the evaluation must be conducted in view of these figures and detailed description.

### Short Explanation of Figures to Help Understand the Invention

Figure - 1; Overhead perspective and detail view of magnet assembly while installed on trailer.
Figure - 2; Bottom perspective and detail view of magnet assembly while installed on trailer.
Figure - 3; Side section view of magnet assembly while installed on trailer.
Figure - 4; Two-dimensional view from the side of the magnet assembly that is subject matter of the invention.

### Reference Numbers

| | |
|---|---|
| **10.** Coil chamber | **213.** Rotating magnet |
| **11.** Chamber base | **214.** Fixed magnet |
| **12.** Trailer chassis | **22.** Magnet connection bracket |
| **20.** Load fastener | **23.** Fixation element |
| **21.** Magnet assembly | **R.** Coil load |
| **211.** Magnet contact surface | **T.** Trailer |
| **212.** Magnet rotation shaft | |

### Detailed Description of the Invention

In this detailed description, preferred structures of the load fastener (20) which is the subject of the invention has been described only to better clarify the subject without placing any restrictions.

The invention consists of coil load where magnetizable materials such as tin, metal etc. are cut and rolled into coils (R); trailer (T) on which the said coil load (R) will be transported; coil chamber (10) on which the said coil load (R) is placed to be transported on the said trailer (T); load fastener (20) positioned on trailer chassis (12) where the said coil chamber (10) is connected to trailer (T), and contains;
- magnet assembly (21) ensuring that the said coil load (R) is fixated with the magnetic field created by the said magnet assembly (21),
- magnet contact surface (211) which ensures that the magnetic field affects the coil load (R) thanks to contact between coil load (R) and the said magnet assembly (21),
- rotating magnet (213) and fixed magnet (214) which are present in the said magnet assembly (21) and create magnetic field.

Magnetizable materials such as tin, metal, etc. are cut and rolled and transported as coil load (R). Transportation of the said coil load (R) is carried out on trailers (T). In the said trailer, there is a trailer chassis (12) containing a coil chamber (10) on which the coil load is placed to be transported. The transportation of the coil load (R) is achieved with load fastener (20) that is fastened to trailer chassis (12). Fastening of the said coil load (R) is achieved by means of the magnetic field created by the magnet assembly (21). Creation of magnetic field with the said magnet assembly (21) is achieved through rotating magnet (213) and fixed magnet (214) in the assembly.

### Structure principle;

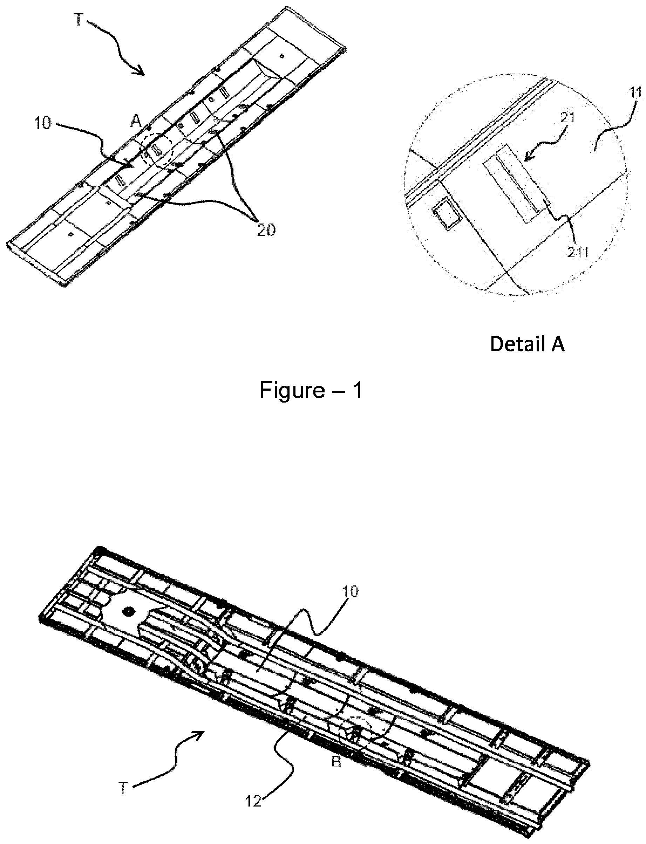

Metal/tin coil loads (R) that are rolled are transported in the coil chamber (10) mounted on the trailer (T) that can be found in any trailer structure. As it can be seen in Figure 1, the coil chamber has a curve where the coil load (R) can be seated. The coils (R) can be transported safely thanks to load fasteners (20) fixed on the coil chamber (10). The said load fastener (20) consists of magnet assembly (21) and magnet connection bracket (22).

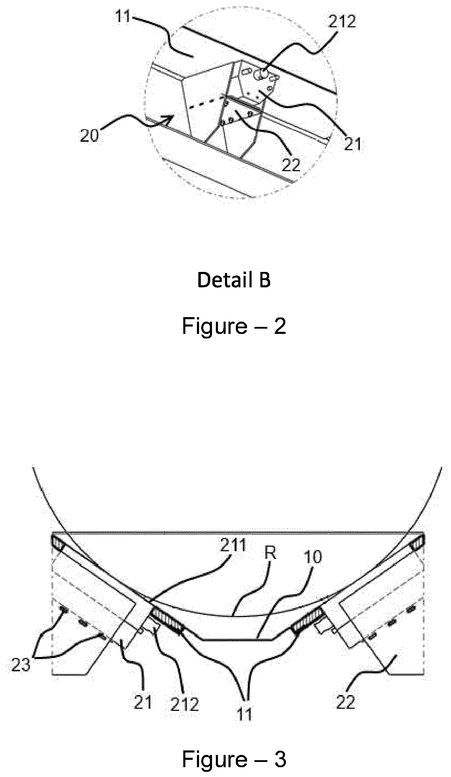

Magnet assembly (21) consists of magnet contact surface (211), magnet rotation shaft (212), rotating magnet (213) and fixed magnet (214). Installation of the said magnet assembly (21) to the magnet connection bracket (22) is achieved via fixation elements (23). In the Detail B in Figure 2, the relation between the magnet assembly (21) and magnet connection bracket (22) is presented.

There are more than one load fasteners (20) in coil chamber (Figure 1 and Figure 2). These load fasteners (20) can be activated all at once or on the basis of requirement. The need varies depending on the size of coil loads (R). Magnet contact surface is positioned as to have joint surface with chamber base (11). This structure can be seen clearly in Detail A in Figure 1 and Figure 3.

In the magnet assembly (21), there are two magnet groups, namely rotating magnet (213) and fixed magnet (214). On the magnet assembly (21), there is a magnet rotation shaft (212) which activates the system and enables the load to be fastened. While the magnet assembly (21) is at passive state, the surfaces of rotating magnet (213) and fixed magnet (214) facing the same direction have different poles. Magnet assembly (21) is activated by rotating the magnet rotation shaft (212). When the magnet assembly (21) is activated, the surfaces of rotating magnet (213) and fixed magnet (214) facing the same direction have the same poles. In order to provide the force to rotate the magnet rotation shaft (212), a hydraulic, pneumatic, mechanical or electrical activator can be used.

### Mounting principle:

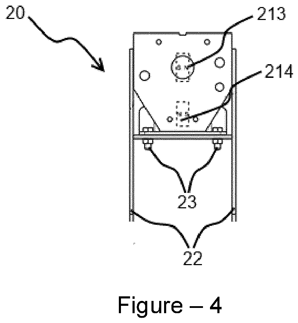

First of all, magnet assembly (21) is fixed on the magnet connection bracket (22) using fixation elements (23) (Figure 4). Magnet connection bracket (22) is mounted on trailer chassis (12). When these procedures are completed, the magnet contact surface (211) leans on chamber base (11). Figure 3 shows the side-section view of the mounted load fastener (20).

The said magnet assembly is a structure created by overlapping the rotating magnet (213) and fixed magnet (214).

### Operation principle:

Magnetizable coil load (R) is placed on curved chamber bases (11) located in coil chamber (10). In order to ensure that the magnetized coil load (R) is secured during lateral forces applied on the vehicle, there are two load fasteners (20) on left and right sides in the coil chamber area (10).

When magnet assembly (21) is active, a magnetic field is created on magnet contact area (211). This magnetic field exerts a pulling force on magnetizable coil loads (R) placed in coil chamber (10). This force holds the magnetizable coil load (R) in place securely.

## Claims

1. The invention consists of roll load where magnetizable materials such as tin, metal etc. are cut and rolled into coils (R); trailer (T) on which the said roll load (R) will be transported; roll chamber (10) on which the said roll load (R) is placed to be transported on the said trailer (T); load fastener (20) positioned on trailer chassis (12) where the said roll chamber (10) is connected to trailer (T), ***and it contains;***
• magnet assembly (21) ensuring that the said roll load (R) is fixated with the magnetic field created by the said magnet assembly (21),
• magnet contact surface (211) which ensures that the magnetic field affects the roll load (R) thanks to contact between roll load (R) and the said magnet assembly (21),
• rotating magnet (213) and fixed magnet (214) that are present in the said magnet assembly (21) and create magnetic field. Magnet can be a product used on different locations in the current technique. However, this element must be assessed as whole with other items instead of individually. In order to consider this element as a known state of the technique, it must also be present on load fasteners with the current technique. As it was seen that this element was not utilized in the current technique according to invention information provided by you, it has been considered an innovation.

2. It is a load fastener (20) in accordance with the Claim 1 and it contains a chamber base (11) on which the magnetic contact surface (211) and coil load (R) would lean in the said coil chamber (10). As the chamber was re-assessed together with the new magnetized structure, it was protected as new with its specified properties.

3. It is a load fastener (20) in accordance with the Claim 1 and it contains a magnet rotation shaft (212) that initiates magnetic field creation by rotating the said rotating magnet (213). It was kept as new in parallel with the Claim 1 by projecting that there is no magnet rotation shaft as no magnetized structure is present in the load fasteners used with the current technique.

4. It is a load fastener (20) in accordance with the Claim 1 and it contains a magnet connection bracket that enables contact between the said magnet assembly (21) and trailer chassis (12).

5. It is a load fastener (20) in accordance with the Claim 4 and it contains a fixation element (23) that enables the said magnet assembly (21) to be fixed on the magnet connection bracket (22).
